(19) Europäisches Patentamt
European Patent Office
Office européen des brevets

(11)  **EP 4 309 903 B1**

(12)  **EUROPEAN PATENT SPECIFICATION**

(45) Date of publication and mention
of the grant of the patent:
**25.03.2026 Bulletin 2026/13**

(21) Application number: **23179299.5**

(22) Date of filing: **14.06.2023**

(51) International Patent Classification (IPC):
***B41J 2/205*** *(2006.01)*      ***B41J 2/21*** *(2006.01)*
***B41J 11/00*** *(2006.01)*      ***G06K 15/02*** *(2006.01)*

(52) Cooperative Patent Classification (CPC):
**B41J 2/2117; B41J 2/2054; B41J 11/009;
G06K 15/023**

(54) **PRINTING APPARATUS AND PRINTING METHOD**

DRUCKVORRICHTUNG UND DRUCKVERFAHREN

APPAREIL D'IMPRESSION ET PROCÉDÉ D'IMPRESSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.07.2022 JP 2022116169**

(43) Date of publication of application:
**24.01.2024 Bulletin 2024/04**

(73) Proprietor: **SCREEN Holdings Co., Ltd.
Kyoto-shi, Kyoto 602-8585 (JP)**

(72) Inventor: **ASAI, Hiroshi
Kyoto-shi, 602-8585 (JP)**

(74) Representative: **Kilian Kilian & Partner mbB
Zielstattstraße 23a
81379 München (DE)**

(56) References cited:
**JP-A- 2005 262 553      JP-A- 2010 102 136
US-A1- 2018 126 747**

**Description**

1. Field of the Invention

This invention relates to so-called back printing of overlapping a white image printed in white ink and a non-white image printed in non-white ink on a transparent sheet-like printing medium.

2. Description of the Related Art

In JP 2019- 1 472 67A, a white image and a non-white image are superimposed on a transparent printing medium such as a film of PET (polyethylene terephthalate), nylon, OPP (oriented polyethylene), CPP (cast polyethylene) or the like or a soft packaging material of cellophane or the like. Such a printed matter is seen by a user through the printing medium from a non-printed side.

Further prior art is JP 2005 262 553 A which discloses the preamble of independent claim 1 and 6 and which is directed on an image recording apparatus enabling high-definition image recording by re-cording images with white ink to the extent that a certain degree of concealability is achieved, when recording images with white ink on various recording mediums. The concealability suitable for image recording is obtained by controlling a print volume and the discharge volume of the white ink.

SUMMARY OF INVENTION

Permeability to visible light may differ depending on the type of the printing medium, whereby how the printed matter looks may differ. Accordingly, to obtain a high-quality printed matter, it is important to consider the permeability of the printing medium. However, conventionally, this point has not been sufficiently taken into account and there has been a room for improvement.

This invention was developed in view of the above problem. An object of the invention is to provide a printing apparatus and a printing method capable of providing a high-quality printed matter without being affected by the permeability of a printing medium in so-called back printing. This object is achieved by the subject matter of the independent claims.

The invention is defined by the independent claims 1 and 6. Preferred embodiments are the subject matter of the dependent claims. Aspects of the invention are set out below.

One aspect of this invention is directed to a printing apparatus. The apparatus comprises: a white printer configured to print a white image in white ink on a transparent sheet-like printing medium; a non-white printer configured to print a non-white image in non-white ink on the printing medium; and a controller configured to control the white printer and the non-white printer such that the white image and the non-white image are superimposed on the printing medium. The apparatus is characterized in that the controller includes: a permeability information acquirer configured to obtain permeability information relating to permeability to visible light of the printing medium; and an ink amount adjuster configured to adjust at least one of a white ink amount constituting the white image and a non-white ink amount constituting the non-white image according to the permeability information.

Other aspect of the invention is a printing method for superimposing a white image printed in white ink and a non-white image printed in non-white ink on a transparent sheet-like printing medium. The method is characterized by comprising: obtaining permeability information relating to permeability to visible light of the printing medium; and adjusting at least one of a white ink amount constituting the white image and a non-white ink amount constituting the non-white image according to the permeability information.

In the invention thus configured, the white image and the non-white image are printed to be superimposed on the transparent sheet-like printing medium. If a printed matter is seen through the printing medium from a side where such a printed matter is not printed, it is affected by the permeability of the printing medium. Accordingly, in the invention, at least one of the white ink amount and the non-white ink amount is adjusted according to the permeability information relating to the permeability. That is, the printed matter taking the permeability of the printing medium into account is obtained.

Note that, in this specification, "transparency" means a property of being permeable to visible light and is a concept including colorless transparency and colored transparency.

As described above, according to the invention, a high-quality printed matter can be obtained by suppressing an influence by the permeability of the printing medium in so-called back printing.

All of a plurality of constituent elements of each aspect of the invention described above are not essential and some of the plurality of constituent elements can be appropriately changed, deleted, replaced by other new constituent elements or have limited contents partially deleted in order to solve some or all of the aforementioned problems or to achieve some or all of effects described in this specification. Further, some or all of technical features included in one aspect of the invention described above can be combined with some or all of technical features included in another aspect of the invention described above to obtain one independent form of the invention in order to solve some or all of the aforementioned problems or to achieve some or all of the effects described in this specification.

BRIEF DESCRIPTION OF THE DRAWINGS

FIG. 1 is a diagram schematically showing a first embodiment of a printing apparatus according to the invention.
FIG. 2 is a table showing an example of a medium information database used in the first embodiment.
FIG. 3 is a diagram schematically showing a second embodiment of the printing apparatus according to the invention.
FIG. 4 is a table showing an example of a medium information database used in the second embodiment.

DETAILED DESCRIPTION OF THE PREFERRED EMBODIMENTS

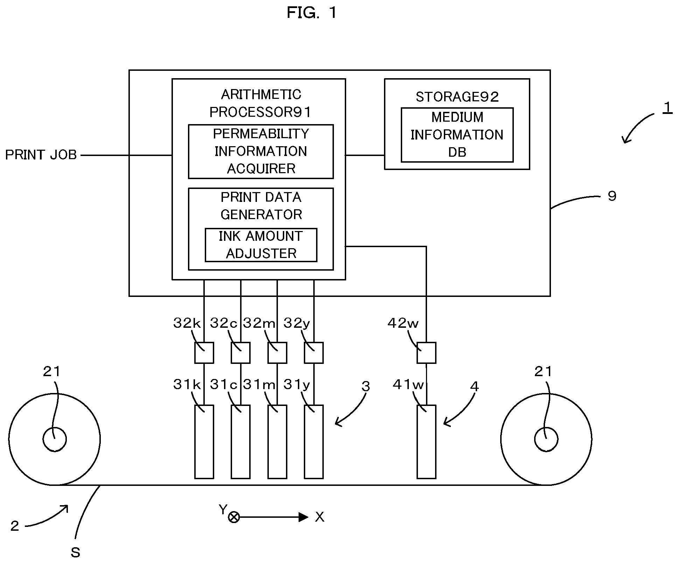

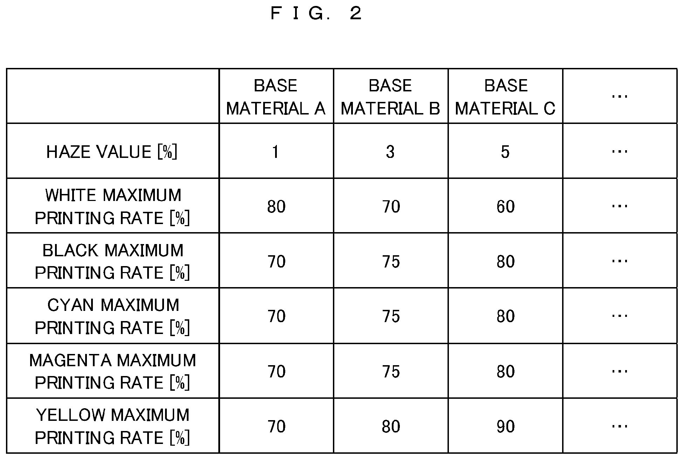

FIG. 1 is a diagram schematically showing a first embodiment of a printing apparatus according to the invention. Further, FIG. 2 is a table showing an example of a medium information database used in the first embodiment. The printing apparatus 1 is provided with a conveyor 2 for conveying a sheet S in a conveying direction X, a color printer 3 for printing a color image, which is an example of a "non-white image" of the invention, on the sheet S, and a base printer 4 for printing a white image, which is an example of a "white image" of the invention. As just described, in this embodiment, the color printer 3 and the base printer 4 respectively correspond to examples of a "non-white printer" and a "white printer" of the invention.
The sheet S is constituted by a transparent film or transparent packaging material described above, and is permeable to visible light. In the first embodiment, the sheet S made of a base material having a "haze value", which is a value indicating permeability, of 5 % or less is used. Note that the "haze value" is a ratio of a diffuse transmittance of components except parallel components to a total light transmittance including the parallel components and diffuse components, and represented by the following equation:

$$\text{Haze value} = (\text{diffuse transmittance})/(\text{total light transmittance}){\times}100.$$

The conveyor 2 includes a feed roller 21 for feeding the sheet S wound into a roll and a take-up roller 22 for taking up the sheet S into a roll. By taking up the sheet S fed by the feed roller 21 by the take-up roller 22, the sheet S is conveyed in a roll-to-roll manner in the conveying direction X.
The color printer 3 includes a plurality of (four) discharge heads 31k, 31c, 31m and 31y for discharging an ink to the sheet S being conveyed in the conveying direction X by an inkjet method. These discharge heads 31k, 31c, 31m and 31y are arranged in this order in the conveying direction X. The discharge head 31k is controlled by a head driver 32k. This head driver 32k receives print data for black (K) from a controller 9 for controlling the entire apparatus, converts this print data into a drive pulse signal and feeds the drive pulse signal to the discharge head 31k. In accordance with this drive pulse signal, the discharge head 31k operates and discharges an ink of black (K). For the other ink colors, the discharge heads 31c, 31m and 31y are similarly connected to head drivers 32c, 32m and 32y, the discharge head 31c discharges an ink of cyan (C), the discharge head 31m discharges an ink of magenta (M) and the discharge head 31y discharges an ink of yellow (Y) in accordance with the print data. In this way, the color printer 3 prints a color image on the sheet S by discharging the inks of process colors (K, C, M, Y) from the discharge heads 31k, 31c, 31m and 31y. Note that each of the discharge heads 31k, 31c, 31m and 31y is capable of discharging three types of ink droplets of different sizes including large ink droplets, medium ink droplets and small ink droplets, and capable of flexibly changing a printing rate and a droplet volume.
The base printer 4 includes a discharge head 41w for discharging an ink by the inkjet method to the color image on the sheet S being conveyed in the conveying direction X on a side downstream of the color printer 3 in the conveying direction X. This discharge head 41w is arranged downstream of the four discharge heads 31k, 31c, 31m and 31y of the color printer 3 in the conveying direction X. The discharge head 41w is controlled by a head driver 42w for driving the discharge head 41w. This head driver 42w receives print data for white (W) from the controller 9, converts this print data into a drive pulse signal and feeds the drive pulse signal to the discharge head 41w. In accordance with this drive pulse signal, the discharge head 41w operates and discharges an ink of white (W). This discharge head 41w is also capable of discharging three types of ink droplets of different sizes including large ink droplets, medium ink droplets and small ink droplets, and capable of flexibly changing a printing rate and a droplet volume.
As just described, in this embodiment, a color ink amount constituting a color image and a white ink amount constituting a white image can be appropriately adjusted. Accordingly, in this embodiment, the color ink amount and the white ink amount are controlled according to a haze value of the sheet S based on knowledge obtained by the inventors of this application.

Here, the knowledge obtained by the inventors of this application is that, if the permeability to visible light of the sheet S differs depending on a base material, e.g. if the haze value largely differs according to base materials A to C constituting the sheet S as shown in FIG. 2, the following optical characteristic appears. For example, out of the above three types, the base material C has a highest haze value. This is equivalent to that a white density of the sheet S is already offset, and means that a high white density (white concealability) can be realized with a relatively small white ink amount. On the other hand, a density of the color image hardly increases. Such a tendency becomes more remarkable as the haze value of the base material constituting the sheet S increases, i.e. permeability decreases. Accordingly, it is preferable in obtaining a high-quality printed matter to decrease the white ink amount and increase the color ink amount as the permeability of the sheet S decreases.

On the contrary, out of the above three types, the base material A has, for example, a lowest haze value. This enables a user to clearly see the color image since the permeability of the sheet S is high and the density of the color image visible through the sheet S is high even with a relatively small color ink amount. On the other hand, to ensure white concealability, the white ink amount needs to be increased. Such a tendency becomes more remarkable as the haze value of the base material constituting the sheet S decreases, i.e. permeability increases. Accordingly, it is preferable in obtaining a high-quality printed matter to increase the white ink amount and decrease the color ink amount as the permeability of the sheet S increases.

Based on such knowledge, in this embodiment, the controller 9 stores, for example, a medium information database shown in FIG. 2 in a storage 92 as shown in FIG. 1. Further, the controller 9 is configured to perform back printing after a maximum printing rate of each color is updated according to the type of the changed base material every time the base material constituting the sheet S is changed. More particularly, as shown in FIG. 1, the controller 9 is provided with an arithmetic processor 91 constituted by a computer including a CPU (= Central Processing Unit), a RAM (= Random Access Memory) and the like, and the storage 92 such as a hard disk drive. The arithmetic processor 91 appropriately reads out a print program stored in the storage 92 in advance, develops the print program in the RAM (not shown) and performs a printing process based on a print job from a user.

The print job includes an image to be printed on the sheet S (hereinafter, referred to as an "input image"). The arithmetic processor 91 obtains the type of the base material constituting the sheet S as an example of "medium information" from the print job. Then, the arithmetic processor 91 refers to the medium information database and specifies the haze value of this base material as permeability information relating to the permeability to visible light of the sheet S. As just described, the arithmetic processor 91 functions as a "medium information acquirer" and a "permeability information acquirer" of the invention. Further, the arithmetic processor 91 obtains the maximum printing rate of each color corresponding to the haze value of the base material constituting the sheet S and generates print data of each color based on those.

As just described, the maximum printing rate of each color is obtained in two stages including a first step of obtaining the haze value (permeability information) from the type of the base material (medium information) and a second step of obtaining the maximum printing rate of each color from the haze value obtained in the first step. However, in this embodiment, the maximum printing rate of each color can be quickly obtained by referring to the table of FIG. 2. That is, as shown in FIG. 2, the medium information database compiling the haze value of each of the base materials A to C constituting the sheet S, the maximum printing rate of the white ink, the maximum printing rate of the black ink, the maximum printing rate of the cyan ink, the maximum printing rate of the magenta ink, the maximum printing rate of the yellow ink in a table format while relating these to each other is created in advance. Accordingly, the arithmetic processor 91 directly obtains the maximum printing rate of each color from the type of the base material constituting the sheet S. Therefore, by preparing the medium information database of FIG. 2 in advance, the maximum printing rate of each color can be more quickly obtained than the two stage steps described above, and a processing speed can be enhanced.

Further, the arithmetic processor 91 functions as a print data generator for generating print data of each color by applying grouping and shading to the input image included in the print job. However, in this embodiment, the print data is not merely generated, but the haze value of the base material constituting the sheet S is considered. That is, the arithmetic processor 91 generates the print data of each color by correcting an image value of the input image or a threshold value (value of a threshold matrix) in shading to obtain the maximum printing rate corresponding to this haze value. Particularly, in this embodiment, since each of the discharge heads 31k, 31c, 31m, 31y and 41w is a head capable of discharging three types of ink droplets of different sizes including large ink droplets, medium ink droplets and small ink droplets, i.e. capable of multi-level output, the arithmetic processor 91 controls, for example, such that a printing rate of large dots is high to increase an ink amount. As just described, the arithmetic processor 91 functions as a print data generator provided with an ink amount adjuster as shown in FIG. 1.

Accordingly, in the printing apparatus 1 configured as described above, the arithmetic processor 91 decreases the white ink amount discharged from the base printer 4 and increases the color ink amount discharged from the color printer 3 as the permeability of the sheet S decreases (the haze value increases). On the other hand, the arithmetic processor 91 increases the white ink amount discharged from the base printer 4 and decreases the color ink amount discharged from the color printer 3 as the permeability of the sheet S increases (the haze value decreases). As a result, an influence by the permeability of the sheet S is suppressed and a high-quality printed matter is obtained in so-called back printing.

In the first embodiment described above, the sheet S corresponds to an example of a "sheet-like printing medium" of the invention. Further, the base printer 4 and the color printer 3 respectively correspond to examples of a "white printer" and a "non-white printer" of the invention. Further, the inks and the ink amounts of the process colors (K, C, M, Y) respectively correspond to examples of a "non-white ink" and a "non-white ink amount" of the invention. Further, the type of the base material constituting the sheet S corresponds to an example of the "type of a printing medium" of the invention.

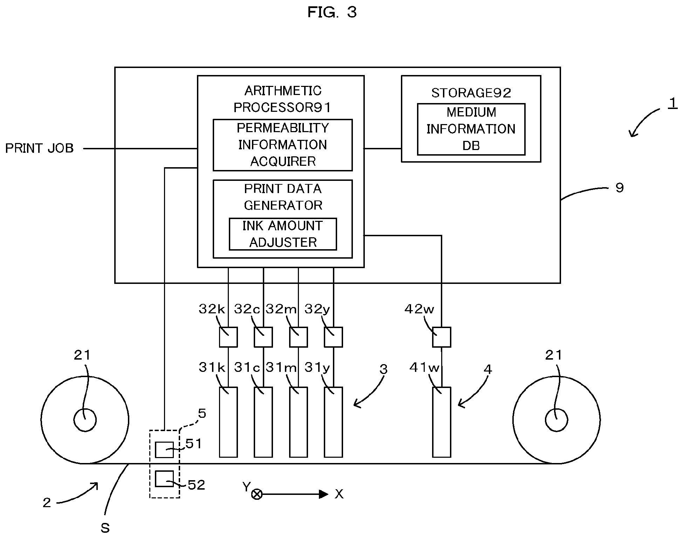

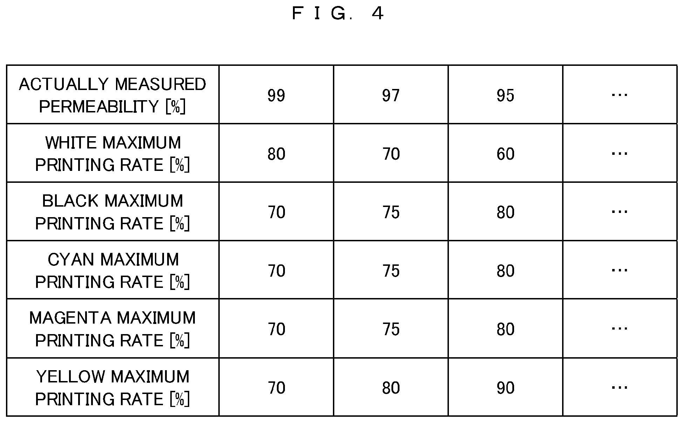

FIG. 3 is a diagram schematically showing a second embodiment of the printing apparatus according to the invention. Further, FIG. 4 is a table showing an example of a medium information database used in the second embodiment. The second embodiment largely differs from the first embodiment in including a permeability meter 5 for measuring the permeability of a sheet S as the "permeability information" of the invention and in the configuration of the medium information database. Note that the other configuration is basically the same as in the first embodiment. Therefore, the following description is centered on points of difference and the same components are denoted by the same reference signs and not described.

In the second embodiment, values of permeability are listed up instead of the types and haze values of base materials as shown in FIG. 4. That is, a medium information database compiling a relationship of the permeability and a maximum printing rate in a table format is stored in a storage 92.

Further, the permeability meter 5 is provided between a feed roller 21 and a color printer 3 in a conveying direction X of a sheet S. The permeability meter 5 includes a line light source 51 and a line sensor 52 respectively parallel to a width direction Y (orthogonal to the conveying direction X) of the sheet S, and the sheet S is sandwiched by the line light source 51 and the line sensor 52. This permeability meter 5 measures the permeability to visible light of the sheet S by detecting an intensity of visible light emitted from the line light source 51 and transmitted through the sheet S before the printing of a color image by the line sensor 52. This measurement result, i.e. actually measured permeability, is output to a controller 9.

An arithmetic processor 91 of the controller 9 obtain a maximum printing rate of each color based on the received actually measured permeability and the medium information database of FIG. 4. Then, as in the first embodiment, the arithmetic processor 91 decreases a white ink amount discharged from a base printer 4 and increases a color ink amount discharged from the color printer 3 as the permeability of the sheet S decreases (the actually measured permeability decreases). On the other hand, the arithmetic processor 91 increases the white ink amount discharged from the base printer 4 and decreases the color ink amount discharged from the color printer 3 as the permeability of the sheet S increases (the actually measured permeability increases). As a result, an influence by the permeability of the sheet S is suppressed and a high-quality printed matter is obtained in so-called back printing.

Note that the invention is not limited to the above embodiments and various changes other than the aforementioned ones can be made without departing from the invention. For example, in the above embodiments, the arithmetic processor 91 functioning as the ink amount adjuster adjusts both the white ink amount constituting the white image and the color ink amount constituting the color image according to the permeability information, but may be configured to adjust at least one of these.

Further, although the permeability of the sheet S before printing is measured in the above second embodiment, the haze value may be measured instead of the permeability.

Further, the color of the sheet S is not limited to a colorless transparent color, but may be a colored transparent color as described above.

The colors of the non-white inks usable to print a non-white image are not limited to the aforementioned process colors K, C, M and Y, but other specific color inks may be, for example, used.

Further, the sizes of the ink droplets dischargeable by each of the discharge heads 31k, 31c, 31m, 31y and 41w are not limited to the above three types. At this time, ink droplets can be appropriately changed and used according to a size variation of the ink droplets.

Although the invention has been described along the specific embodiments, this description is not intended to be interpreted in a limited sense. If the description of the invention is referred to, various modifications of the disclosed embodiments would be apparent to a person skilled in this art similarly to other embodiments of the invention.

The invention is applicable to so-called back printing techniques in general for superimposing a white image printed in white ink and a non-white image printed in non-white ink on a transparent sheet-like printing medium.

## Claims

1. A printing apparatus (1), comprising:

   a conveyor (2) configured to convey a transparent sheet-like printing medium (S) in a conveying direction (X);
   a color printer (3) configured to print a color image on the printing medium (S) by discharging a color ink amount of ink;

a white printer (4) disposed on a side downstream of the color printer (3) in the conveying direction (X) and configured to print a white image in white ink on the printing medium (S); and

a controller (9) configured to control the white printer (4) and the color printer (3) such that the white image and the color image are superimposed on the printing medium (S), wherein

the controller (9) includes:

a permeability information acquirer configured to obtain permeability information relating to permeability to visible light of the printing medium (S); and **characterized in**

an ink amount adjuster configured to adjust both a white ink amount constituting the white image and the color ink amount constituting the color image, or only the color ink amount, according to the permeability information.

2. The printing apparatus (1) according to claim 1, wherein:

the ink amount adjuster is configured to increase the color ink amount while decreasing the white ink amount as the permeability decreases.

3. The printing apparatus (1) according to claim 1, wherein:

the ink amount adjuster is configured to decrease the color ink amount while increase the white ink amount as the permeability increases.

4. The printing apparatus (1) according to any one of claims 1 to 3, wherein:

the controller (9) further includes a storage configured to store a medium information database specifying a haze value of each type of the printing medium (S) in advance and a medium information acquirer configured to obtain medium information relating to the type of the printing medium (S), and

the permeability information acquirer is configured to read out the haze value corresponding to the medium information obtained by the medium information acquirer as the permeability information from the storage.

5. The printing apparatus (1) according to any one of claims 1 to 3, comprising a permeability meter configured to measure the permeability of the printing medium (S), wherein:

the permeability information acquirer is configured to obtain the permeability measured by the permeability meter as the permeability information.

6. A printing method for superimposing a white image printed in white ink and a color image on a transparent sheet-like printing medium (S), the method comprises:

printing the color image by discharging a color ink amount of ink to the printing medium (S);

printing the white image by discharging white ink to the color image;

obtaining permeability information relating to permeability to visible light of the printing medium (S); and **characterized in that** the method comprises

adjusting both a white ink amount constituting the white image and the color ink amount constituting the color image, or only the color ink amount, according to the permeability information.

## Patentansprüche

1. Eine Druckvorrichtung (1), umfassend:

einen Förderer (2), der dazu konfiguriert ist, ein transparentes, blattförmiges Druckmedium (S) in einer Förderrichtung (X) zu fördern;

einen Farbdrucker (3), der dazu konfiguriert ist, ein Farbbild auf das Druckmedium (S) zu drucken, indem eine Menge an Farbtinte abgegeben wird;

einen Weißdrucker (4), der in Förderrichtung (X) stromabwärts des Farbdruckers (3) angeordnet ist und dazu konfiguriert ist, ein Weißbild mit weißer Tinte auf das Druckmedium (S) zu drucken; sowie

eine Steuereinheit (9), die dazu konfiguriert ist, den Weißdrucker (4) und den Farbdrucker (3) derart zu steuern, dass das Weißbild und das Farbbild auf dem Druckmedium (S) übereinandergelegt sind, wobei

die Steuereinheit (9) umfasst:

eine Erfassungseinrichtung für Durchlässigkeitsinformationen, die dazu konfiguriert ist, Durchlässigkeitsinformationen betreffend die Durchlässigkeit des Druckmediums (S) für sichtbares Licht zu erfassen; und **dadurch gekennzeichnet, dass** sie umfasst

eine Tintenmengen-Einstelleinrichtung, die dazu konfiguriert ist, sowohl eine das Weißbild konstituierende Menge an weißer Tinte als auch die das Farbbild konstituierende Menge an Farbtinte oder nur die Menge an Farbtinte in Abhängigkeit von den Durchlässigkeitsinformationen einzustellen.

2. Druckvorrichtung (1) nach Anspruch 1, wobei:
die Tintenmengen-Einstelleinrichtung so konfiguriert ist, dass sie die Farbtintenmenge erhöht und die Menge der weißen Tinte verringert, wenn die Durchlässigkeit abnimmt.

3. Druckvorrichtung (1) nach Anspruch 1, wobei:
die Tintenmengen-Einstelleinrichtung dazu konfiguriert ist, die Menge an Farbtinte zu verringern, während die Menge an weißer Tinte erhöht wird, wenn die Durchlässigkeit zunimmt.

4. Die Druckvorrichtung (1) nach einem der Ansprüche 1 bis 3, wobei:

die Steuereinheit (9) ferner eine Speichereinrichtung umfasst, die dazu konfiguriert ist, im Voraus eine Medieninformationsdatenbank zu speichern, die für jeden Typ des Druckmediums (S) einen Trübungswert (haze) spezifiziert, sowie eine Medieninformationserfassungseinrichtung, die dazu konfiguriert ist, Medieninformationen in Bezug auf den Typ des Druckmediums (S) zu erfassen, und
die Erfassungseinrichtung für Durchlässigkeitsinformationen dazu konfiguriert ist, den dem durch die Medieninformationserfassungseinrichtung erfassten Medieninformationen entsprechenden Trübungswert aus der Speichereinrichtung als die Durchlässigkeitsinformationen auszulesen.

5. Die Druckvorrichtung (1) nach einem der Ansprüche 1 bis 3, umfassend ein Durchlässigkeitsmessgerät, das dazu konfiguriert ist, die Durchlässigkeit des Druckmediums (S) zu messen, wobei:
die Erfassungseinrichtung für Durchlässigkeitsinformationen dazu konfiguriert ist, die von dem Durchlässigkeitsmessgerät gemessene Durchlässigkeit als die Durchlässigkeitsinformationen zu erfassen.

6. Ein Druckverfahren zum Übereinanderlegen eines mit weißer Tinte gedruckten Weißbildes und eines Farbbildes auf einem transparenten, blattförmigen Druckmedium (S), wobei das Verfahren umfasst:

das Drucken des Farbbildes, indem eine Menge an Farbtinte auf das Druckmedium (S) abgegeben wird;
das Drucken des Weißbildes, indem weiße Tinte auf das Farbbild abgegeben wird;
das Erfassen von Durchlässigkeitsinformationen betreffend die Durchlässigkeit des Druckmediums (S) für sichtbares Licht; und **dadurch gekennzeichnet, dass** das Verfahren umfasst
das Einstellen sowohl einer das Weißbild konstituierenden Menge an weißer Tinte als auch der das Farbbild konstituierenden Menge an Farbtinte oder nur der Menge an Farbtinte in Abhängigkeit von den Durchlässigkeitsinformationen.

**Revendications**

1. Un appareil d'impression (1), comprenant :

un convoyeur (2) configuré pour acheminer un milieu d'impression transparent en forme de feuille (S) dans une direction de convoyage (X) ;
une imprimante couleur (3) configurée pour imprimer une image couleur sur le milieu d'impression (S) en déchargeant une quantité d'encre couleur ;
une imprimante blanche (4) disposée en aval de l'imprimante couleur (3) dans la direction de convoyage (X) et configurée pour imprimer une image blanche en encre blanche sur le milieu d'impression (S) ; et
un contrôleur (9) configuré pour commander l'imprimante blanche (4) et l'imprimante couleur (3) de manière à ce que l'image blanche et l'image couleur soient superposées sur le milieu d'impression (S), dans lequel
le contrôleur (9) comprend :

un module d'acquisition d'informations de perméabilité configuré pour obtenir des informations de perméabilité relatives à la perméabilité à la lumière visible du milieu d'impression (S) ; et est **caractérisé en ce**

**qu'**il comprend
un dispositif d'ajustement de la quantité d'encre configuré pour ajuster à la fois une quantité d'encre blanche constituant l'image blanche et la quantité d'encre couleur constituant l'image couleur, ou uniquement la quantité d'encre couleur, en fonction des informations de perméabilité.

**2.** Appareil d'impression (1) selon la revendication 1, dans lequel :
le dispositif d'ajustement de la quantité d'encre est configuré pour augmenter la quantité d'encre couleur tout en diminuant la quantité d'encre blanche lorsque la perméabilité diminue.

**3.** Appareil d'impression (1) selon la revendication 1, dans lequel :
le dispositif d'ajustement de la quantité d'encre est configuré pour diminuer la quantité d'encre couleur tout en augmentant la quantité d'encre blanche lorsque la perméabilité augmente.

**4.** Appareil d'impression (1) selon l'une quelconque des revendications 1 à 3, dans lequel :

le contrôleur (9) comprend en outre un dispositif de stockage configuré pour stocker à l'avance une base de données d'informations sur les supports spécifiant une valeur de voile (haze) pour chaque type de milieu d'impression (S), ainsi qu'un module d'acquisition d'informations sur le support configuré pour obtenir des informations relatives au type du milieu d'impression (S), et
le module d'acquisition d'informations de perméabilité est configuré pour extraire, à partir du dispositif de stockage, la valeur de voile correspondant aux informations sur le support obtenues par le module d'acquisition d'informations sur le support, en tant qu'informations de perméabilité.

**5.** Appareil d'impression (1) selon l'une quelconque des revendications 1 à 3, comprenant un appareil de mesure de la perméabilité configuré pour mesurer la perméabilité du milieu d'impression (S), dans lequel :
le module d'acquisition d'informations de perméabilité est configuré pour obtenir, en tant qu'informations de perméabilité, la perméabilité mesurée par l'appareil de mesure de la perméabilité.

**6.** Procédé d'impression destiné à superposer une image blanche imprimée en encre blanche et une image couleur sur un milieu d'impression transparent en forme de feuille (S), le procédé comprenant :

l'impression de l'image couleur par décharge d'une quantité d'encre couleur sur le milieu d'impression (S) ;
l'impression de l'image blanche par décharge d'encre blanche sur l'image couleur ;
l'obtention d'informations de perméabilité relatives à la perméabilité à la lumière visible du milieu d'impression (S) ; et **caractérisé en ce que** le procédé comprend
l'ajustement à la fois d'une quantité d'encre blanche constituant l'image blanche et de la quantité d'encre couleur constituant l'image couleur, ou uniquement de la quantité d'encre couleur, en fonction des informations de perméabilité.

FIG. 1

F I G．2

| | BASE MATERIAL A | BASE MATERIAL B | BASE MATERIAL C | ... |
|---|---|---|---|---|
| HAZE VALUE [%] | 1 | 3 | 5 | ... |
| WHITE MAXIMUM PRINTING RATE [%] | 80 | 70 | 60 | ... |
| BLACK MAXIMUM PRINTING RATE [%] | 70 | 75 | 80 | ... |
| CYAN MAXIMUM PRINTING RATE [%] | 70 | 75 | 80 | ... |
| MAGENTA MAXIMUM PRINTING RATE [%] | 70 | 75 | 80 | ... |
| YELLOW MAXIMUM PRINTING RATE [%] | 70 | 80 | 90 | ... |

FIG. 3

F I G. 4

| ACTUALLY MEASURED PERMEABILITY [%] | 99 | 97 | 95 | ⋯ |
|---|---|---|---|---|
| WHITE MAXIMUM PRINTING RATE [%] | 80 | 70 | 60 | ⋯ |
| BLACK MAXIMUM PRINTING RATE [%] | 70 | 75 | 80 | ⋯ |
| CYAN MAXIMUM PRINTING RATE [%] | 70 | 75 | 80 | ⋯ |
| MAGENTA MAXIMUM PRINTING RATE [%] | 70 | 75 | 80 | ⋯ |
| YELLOW MAXIMUM PRINTING RATE [%] | 70 | 80 | 90 | ⋯ |

**EP 4 309 903 B1**

**REFERENCES CITED IN THE DESCRIPTION**

**Patent documents cited in the description**

- JP 2019147267 A
- JP 2005262553 A